**Europäisches Patentamt**

(19) **European Patent Office**

**Office européen des brevets**

(11) Numéro de publication: **0 224 539**
**B1**

(12) # FASCICULE DE BREVET EUROPÉEN

(45) Date de publication du fascicule du brevet:
**31.08.88**

(21) Numéro de dépôt: **86903428.0**

(22) Date de dépôt: **10.06.86**

(86) Numéro de dépôt international:
**PCT/FR 86/00199**

(87) Numéro de publication internationale:
**WO 86/07280 (18.12.86 Gazette 86/27)**

(51) Int. Cl.⁴: **B 01 D 13/02 //**
**A23C9/144, C07K3/26**

(54) **PROCEDE ET DISPOSITIF DE SEPARATION PAR ELECTRO-ULTRAFILTRATION.**

(30) Priorité: **13.06.85 FR 8509124**

(43) Date de publication de la demande:
**10.06.87 Bulletin 87/24**

(45) Mention de la délivrance du brevet:
**31.08.88 Bulletin 88/35**

(84) Etats contractants désignés:
**AT BE CH DE FR GB IT LI LU NL SE**

(56) Documents cité:
**US-A-3 945 900**
**US-A-3 990 968**

**Environmental Science and Technology, vol. 5, No. 9, September 1971 Easton, Pa. (US) S. P. Moulik "Physical aspects of electrofiltration", pages 771-776, see figures 1,2; page 771, column 1, line 1 to page 772, column 1, line 31**
**Separation Science and Technology, vol. 15, No. 8, 1980, J.M. Radovich et al.: "Coupling electrophoresis with ultrafiltration for improved processing of plasma proteins", pages 1491-1498, see page 1491, line 1 to page 1493, line 2**

(73) Titulaire: **CENTRE NATIONAL DE LA RECHERCHE SCIENTIFIQUE (CNRS), 15, Quai Anatole France, F-75700 Paris Cedex 07 (FR)**

(72) Inventeur: **SANCHEZ, Victor, 1, rue Léonard de Vinci, F-31520 Ramonville Saint Agne (FR)**
Inventeur: **AIMAR, Pierre, 29, rue Noulet, F-31400 Toulouse (FR)**
Inventeur: **MAHENC, Jean, 137, Labastide Falgarde Lacroix Falgarde, F-31120 Portet sur Garonne (FR)**

(74) Mandataire: **Barre, Philippe, Cabinet Barre- Gatti- Laforgue 95 rue des Amidonniers, F-31069 Toulouse Cédex (FR)**

## Description

L'invention concerne un procédé de séparation de particules solides ou macromolécules, électriquement chargées, contenues dans une solution ; elle vise à perfectionner un procédé habituellement désigné par "électro-ultrafiltration" consistant à filtrer la solution sous pression à travers une membrane semi-perméable spécifique de la séparation à effectuer et à appliquer un champ électrique pour réduire le gradient de concentration au voisinage immédiat de ladite membrane. L'invention s'étend à un dispositif pour la mise en oeuvre du procédé visé.

La technique sus-évoquée d'électro-ultrafiltration a été récemment conçue à partir des techniques d'ultrafiltration, lesquelles consistent à amener, sous l'effet d'une différence de pression, la solution à traiter à traverser une membrane semi-perméable dont le seuil de coupure est adapté aux macromolécules à retenir (plage de 5 000 à 100 000 daltons) ; toutefois un gradient de concentration (encore désigné par les spécialistes par "polarisation de concentration") apparaît rapidement dans ces techniques au voisinage de la membrane semi-perméable et limite la densité du flux de perméat et, donc, l'efficacité de la séparation. La technique d'électro-ultrafiltration permet de réduire ce gradient de concentration dans le cas où les macromolécules sont chargées électriquement, en appliquant un champ électrique continu dans la solution ; le sens de ce champ est prévu de sorte que la migration électrophorétique des macromolécules tende à les éloigner de la membrane. On pourra notamment se reporter aux publications suivantes qui décrivent ce type de procédé:
- brevet US n° 3 905 886 (WANG),
- brevet US n° 4 043 896 (AHLGREN),
- J.M RADOVICH, R.E. SPARKS :
"Electrophoretic techniques for controlling concentration polarization in ultrafiltration in : "Ultrafiltration membranes and applications" A.R. COOPER (Ed) - Plenum Press - New-York - 1980,
- J.M. RADOVICH, N.S. MASON and R.E. SPARKS "Coupling Electrophoresis with ultrafiltration for Improved processing of Plasma Proteins" in "Separation Science and Technology, 15, (8), pp. 1491 (1980),
- J.M RADOVICH and I.M. CHAD: "Electro-ultrafiltration of a Cationic Electrodeposition paint" in: J. of Coating Technology, 54, (695), p. 33, (1982),
- H. YUKAWA, K. SHIMURA, A. SUDA, A. MANIWA: "Characteristics of cross flow électro-ultrafiltration for colloidal solution of proteins" in "J. of Chemical Engineering of Japan, 16, (3), p. 246, (1983).

Cette technique d'électro-ultrafiltration présente toutefois un grave défaut pratique provenant de sa nature même: il n'est pas possible d'utiliser plusieurs membranes semi-perméables juxtaposées afin de délimiter des compartiments contigus permettant d'accroître les surfaces d'échange, comme cela se pratique dans l'ultrafiltration traditionnelle ; en effet quel que soit le sens du champ électrique, la diminution du gradient de concentration au voisinage d'une membrane donnée s'accompagnerait nécessairement d'une augmentation de ce gradient au voisinage des deux membranes voisines, puisque le champ électrique se trouverait alors orienté dans le mauvais sens pour ces deux membranes: le gain d'efficacité produit par le champ électrique pour la moitié des membranes serait neutralisé par la réduction d'efficacité résultant de ce champ pour les autres membranes. Dans certains dispositifs, il est prévu une alternance de membranes semi-perméables d'ultrafiltration et de membranes imperméables au solvant (brevets US 3 905 886 et 4 043 896). Ainsi, une membrane sur deux opère l'ultrafiltration qui s'effectue dans un seul sens, (le champ électrique étant appliqué de façon à réduire le gradient au voisinage desdites membranes semi-perméables) ; les autres membranes ont pour simple fonction de séparer les compartiments entre eux. L'inconvénient de ce dispositif est que, à encombrement égal, l'on réduit de moitié la surface d'échange par rapport à un dispositif d'ultrafiltration traditionnel, de sorte que l'électro-ultrafiltration perd la plus grande partie de son intérêt.

La présente invention vise à perfectionner le procédé d'électro-ultrafiltration sus-évoqué de façon à combiner les avantages fournir dans l'ultrafiltration traditionnelle par les agencements en série de membranes semi-perméables et ceux fournis dans l'électro-ultrafiltration par l'application d'un champ électrique.

L'objectif essentiel de l'invention est donc de bénéficier, à la fois, de surfaces d'échange importantes pour un encombrement donné et d'une efficacité permanente accrue.

Le procédé visé par l'invention permet de séparer des particules solides ou macromolécules , électriquement chargées, contenues dans un solvant, colloïdes contenus dans des bains, particules chargées en suspension dans un liquide... Ce procédé utilise des membranes semi-perméables spécifiques de la séparation à effectuer, c'est-à-dire aptes à assurer le phénomène de filtration à l'égard des particules ou macromolécules concernées ; ces membranes seront désignées ci-après par "membrane semi-perméable spécifique" (par opposition aux membranes imperméables au solvant déjà évoquées).

Le procédé conforme à la présente invention consiste:
- à agencer en regard les unes des autres n membranes semi-perméables spécifiques, en vue de délimiter n-1 compartiments intermédiaires situés entre lesdites membranes, bordés par deux compartiments latéraux, n étant supérieur ou égal à 2,
- à disposer une solution électrolytique dans un compartiment sur deux à une pression, dite basse pression, et à disposer la solution à traiter dans les autres compartiments à une pression supérieure, dite haute pression, de sorte que la filtration dans un compartiment intermédiaire s'effectue en sens opposés à travers les deux membranes semi-perméables spécifiques qui le délimitent, soit vers ledit compartiment intermédiaire s'il s'agit d'un compartiment basse pression, soit vers les deux compartiments contigus s'il s'agit d'un compartiment haute pression,

- et à appliquer un champ électrique dans les n+1 compartiments en inversant périodiquement le sens de ce champ, à une fréquence inférieure à environ 0,2 hertz.

Ainsi, le procédé de l'invention conduit à mettre directement en série plusieurs membranes semi-perméables spécifiques de façon que la filtration s'effectue dans un sens pour une membrane donnée et en sens opposé pour les deux membranes voisines. Aucune membrane imperméable au solvant n'est nécessaire (à noter que, comme on le verra plus loin, de telles membranes peuvent le cas échéant être prévues dans certaines applications pour remplir des fonctions auxiliaires, notamment de dé minéralisation). Les expérimentations ont permis de constater que, de façon inattendue, l'inversion périodique du champ électrique à très faible fréquence produit une augmentation globale d'efficacité (dans certains cas très importante) par rapport à une ultrafiltration traditionnelle réalisée dans les mêmes conditions opératoires. Cet effet surprenant peut vraisemblablement s'expliquer par le fait que, pour un sens donné du champ électrique, le phénomène de diminution de concentration et le phénomène d'augmentation de concentration au voisinage de deux membranes voisines n'ont pas la même cinétique au cours d'un régime transitoire de courte durée ; ils'ensuit que, globalement pour une membrane donnée, le champ périodiquement alterné produit une diminution de la concentration et possède donc un effet résultant de réduction du gradient de concentration au voisinage de chaque membrane: le champ électrique permet ainsi de réduire considérablement la chute d'efficacité de la séparation au bout d'un certain temps de fonctionnement et ce, pour toutes les membranes semi-perméables juxtaposées.

Il est à noter qu'il existe, dans un secteur proche, une technique d'osmose inverse décrite dans le brevet US 3 990 968 qui réalise une séparation de particules en prévoyant d'appliquer un champ alternatif de haute fréquence (de 30 à 10 000 hertz et préférentiellement de 500 à 5 000 hertz).

Toutefois, cette technique, qui exige la présence d'une électrode poreuse accolée à chaque membrane, met en oeuvre des phénomènes fondamentalement différents: le champ électrique vise à faire entrer en résonance les espèces en présence en vue de diminuer la constante diélectrique du milieu et, à cet effet, doit être proche de la fréquence de relaxation des molécules. D'après ce brevet, cette diminution de la constante diélectrique entraîne une augmentation des transferts.

Dans l'invention, la structure du dispositif est très différente, puisque celui-ci ne comporte que deux électrodes situées de part et d'autre de l'ensemble des membranes et les effets du champ électrique consistent en un déplacement des espèces chargées par rapport aux membranes. Entre deux inversions, le champ doit s'appliquer de façon continue avec une durée suffisamment longue (au moins cinq secondes) pour qu'il y ait effectivement déplacement des espèces. L'effet favorable de l'inversion périodique du champ provient de la différence de cinétique entre les déplacements vers chaque membrane et le déplacement en direction opposée: c'est cet effet qui est utilisé pour réduire le gradient de concentration à proximité des membranes et ainsi augmenter très notablement les transferts de matière.

Selon les applications, on peut agencer en série deux membranes semi-perméables spécifiques ou un nombre de membranes plus élevé.

Selon un mode de mise en oeuvre optimisant le résultat obtenu, les inversions du sens du champ électrique sont réalisées aux termes de laps de temps compris entre 0,5 et 15 minutes, en particulier entre 2 et 5 minutes. Cette dernière plage de valeurs qui apparaît expérimentalement comme nettement préférentielle, permet d'opérer la séparation durant une succession de régimes transitoires (qui suivent chaque inversion) au cours desquels les phénomènes d'augmentation et de diminution de concentration ont des cinétiques nettement différentes.

Les conditions de mise en oeuvre qui semblent les meilleures sont les suivantes:

- champ électrique ajusté dans une plage de valeurs comprise entre 3 et 20 volts/cm, de sorte que la densité de courant résultante dans les compartiments soit inférieure à' 40 milliAmpères/cm$^2$,

- pression régnant dans les compartiments basse pression ajustée à une valeur proche de la pression atmosphérique,

- pression absolue régnant dans les compartiments haute pression comprise entre 1,5 et 6 bars.

Le procédé de l'invention peut être appliqué dans tous les cas où des particules ou des macromolécules électriquement chargées sont à séparer d'une solution. Le procédé peut en particulier être mis en oeuvre pour réaliser une ultrafiltration de macromolécules chargées, de tailles inférieures à 20 RM (200 Angströms) (fractionnement, concentration ou purification) ; il peut également être utilisé pour réaliser une microfiltration tangentielle de particules solides chargées, de tailles inférieures à 10 μm.

Le procédé de l'invention peut être combiné à un autre traitement effectué sur la solution, en particulier traitement tendant à modifier la teneur en ions de petite taille de celle-ci (déminéralisation ou, le cas échéant, concentration en ions minéraux). Il suffit alors, d'une part, de prévoir au moins deux membranes échangeuses d'ions en vue de délimiter dans le dispositif un volume de déminéralisation ou concentration en ions, d'autre part, d'appliquer un champ électrique inversé périodiquement dans un sens puis dans l'autre pendant des périodes de durées différentes. La variation de la concentration en ions possède une cinétique symétrique pour les deux sens du champ électrique, de sorte que l'application du champ pendant des périodes de durées différentes dans un sens et dans l'autre permet d'obtenir un effet global de concentration ou de déminéralisation selon le sens du champ qui est privilégié, et ce, tout en conservant l'effet de réduction du gradient de concentration en macromolécules ou particules au voisinage des membranes semi-perméables spécifiques.

L'invention s'étend à un dispositif de séparation, du type comprenant un compartiment haute pression contenant une solution à traiter, un compartiment basse pression contenant une solution électrolytique, une membrane semi-perméable de filtration spécifique de la séparation à effectuer, disposée entre lesdits compartiments, et des électrodes aptes à appliquer un champ électrique dans lesdits compartiments ; selon la présente invention, le dispositif comprend n membranes semi-perméables de filtration spécifique disposées directement en regard les unes des autres pour délimiter une alternance de compartiments haute pression et basse pression ($n \geqslant 2$), les électrodes situées de part et d'autre des deux compartiments latéraux étant reliées à des moyens électriques adaptés pour les soumettre à une différence de potentiel périodiquement inversée.

Selon un mode de réalisation préféré, les moyens électriques comprennent un générateur électrique à courant continu associé à un inverseur de polarité programmable selon une fréquence d'inversion comprise entre $5.10^{-4}$ et $1,5.10^{-2}$ hz.

La description qui suit en référence aux dessins annexés présente des modes de réalisation du dispositif et des exemples de mise en oeuvre du procédé ; sur ces dessins:
- la figure 1 est une vue schématique d'ensemble d'un dispositif de séparation conforme à l'invention,
- la figure 2 est un schéma du dispositif utilisé pour la mise en oeuvre de l'exemple 1, cependant que la figure 3 est un schéma du dispositif utilisé pour la mise en oeuvre des exemples 2 et 3 et que la figure 4 est un schéma du dispositif utilisé pour la mise en oeuvre de l'exemple 4,
- la figure 5 est un diagramme comparatif illustrant les résultats obtenus à l'exemple 1 par rapport à une ultrafiltration traditionnelle,
- la figure 6 est un diagramme comparatif illustrant les résultats obtenus à l'exemple 2,
- la figure 7 est un diagramme comparatif illustrant les résultats obtenus à l'exemple 3,
- la figure 8 est un diagramme comparatif illustrant les résultats obtenus à l'exemple 4.

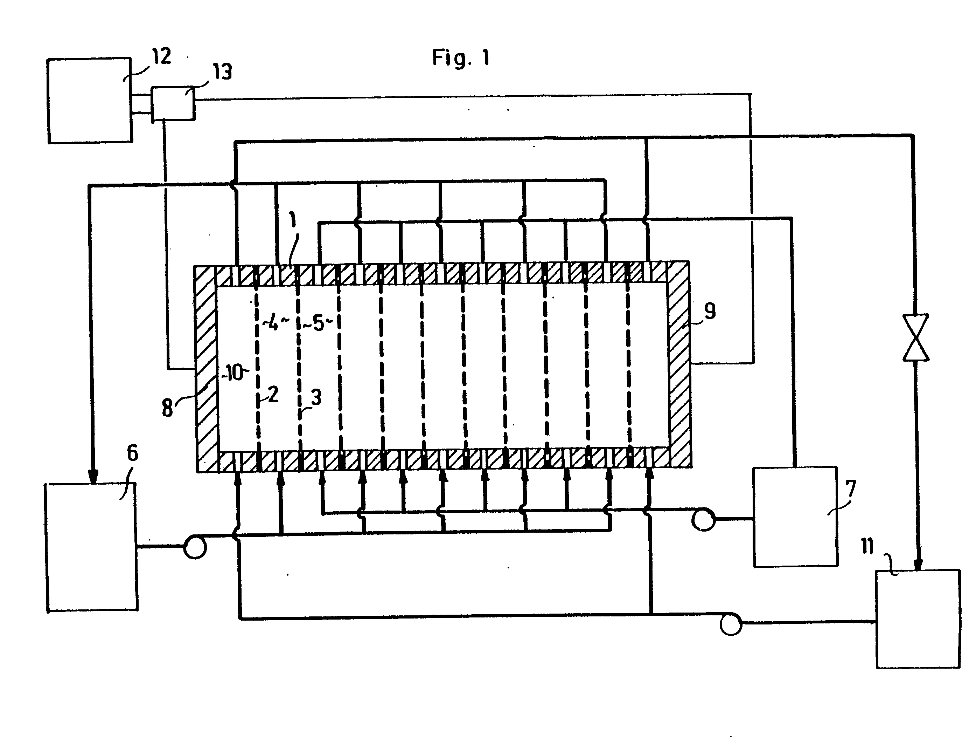

Le dispositif représenté schématiquement à la figure 1 est destiné à séparer par filtration des macromolécules ou particules solides, chargées électriquement, contenues dans une solution.

Ce dispositif comprend une structure traditionnelle 1 de type filtre-presse, permettant de positionner une série de -n- membranes parallèlement et en regard les unes des autres afin de délimiter des compartiments de travail. Cette structure est formée de façon traditionnelle par un empilage de cadres isolants sur le plan électrique.

Dans le dispositif représenté à la figure 1, toutes les membranes 2, 3... sont des membranes semi-perméables spécifiques de la séparation à effectuer. Dans les exemples présentés plus loin, les membranes semi-perméables utilisés sont en polyacrylonitrile de seuil de coupure égal à 10 000 et de surface utile égale à 55,2 cm$^2$ (membranes semi-perméables fabriquées par "Rhône-Poulenc" sous la référence "Iris 3038").

Comme on le verra plus loin, cet agencement n'interdit pas de disposer d'autres membranes pour remplir une fonction auxiliaire telle que déminéralisation de la solution ; toutefois, ces membranes supplémentaires ne jouent aucun rôle dans la séparation et ne modifient pas les phénomènes mis en jeu pour la filtration.

En l'exemple, les n membranes 2, 3 délimitent n-1 compartiments intermédiaires tels que 4, 5... qui sont alimentés alternativement, à basse pression par une solution électrolytique contenue dans un réservoir 6, et à haute pression par la solution à traiter contenue dans un réservoir 7.

Dans les exemples qui suivent, la solution électrolytique est une solution de chlorure de sodium à une pression correspondant à la pression atmosphérique aux pertes de charge près ; la solution à traiter est délivrée à une pression absolue qui a été amenée à varier entre 1,5 et 3,5 bars dans les exemples. La mise sous pression peut être assurée par tout système classique (réservoir sous pression, vanne de laminage...). Des pompes assurent la circulation.

Dans le mode de réalisation représenté à la figure 1, les circuits de liquide sont montés en parallèles ; ils peuvent également être connectés en série ou selon toute combinaison connue.

De part et d'autre, le dispositif est fermé par deux électrodes 8 et 9 de type connu (graphite, platine, acier inoxydable). Ces électrodes délimitent avec les deux membranes extrêmes, deux compartiments latéraux tels que 10, dans lesquels circule une solution électrolytique contenue dans un réservoir 11 ; dans les exemples fournis ci-après, cette solution est identique à celle contenue à l'origine dans le réservoir 6.

Les deux compartiments latéraux 10, voisins des électrodes, forment un circuit séparé afin de ne pas mélanger aux autres solutions des produits de réaction électrochimique éventuellement formés.

Les électrodes 8 et 9 sont reliées à un générateur électrique à courant continu 12, par l'intermédiaire d'un inverseur de polarité 13 de type classique en lui-même ; dans les exemples 1, 2 et 3 décrits ci-après, les polarités sont inversées périodiquement au terme de laps de temps de 1 minute, 5 minutes ou 15 minutes. Dans l'exemple 4, le cycle d'inversion est dissymétrique (5/10 minutes).

## Exemple 1-Electro-ultrafiltration d'une solution aqueuse d'albumine bovine

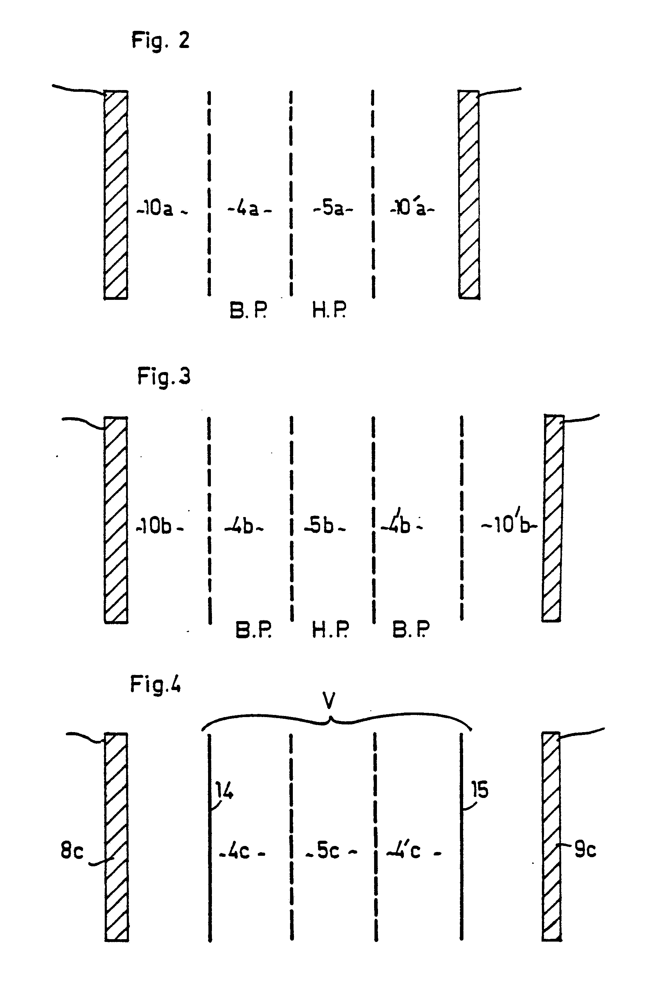

Cet exemple a été mis en oeuvre dans un dispositif du type ci-dessus décrit, comprenant trois membranes semi-perméables spécifiques comme schématisé à la figure 2.

La solution d'albumine à traiter, envoyée dans le compartiment haute pression 5a, présente un pH égal à 3 et contient 5 grammes d'albumine par litre (protéine chargée positivement à ce pH, de diamètre de l'ordre de 6 nm (60 Angströms)). La solution électrolytique envoyée aussi bien dans le compartiment intermédiaire basse pression 4a que dans les compartiments latéraux 10a, 10'a présente une concentration initiale de 1 g/l de chlorure de sodium et un pH égal à 3.

On mesure à diverses pressions le débit de perméat, c'est-à-dire la quantité de solvant passant par unité de temps à travers les membranes semi-perméables spécifiques. Ce débit donne une image de l'efficacité de la filtration.

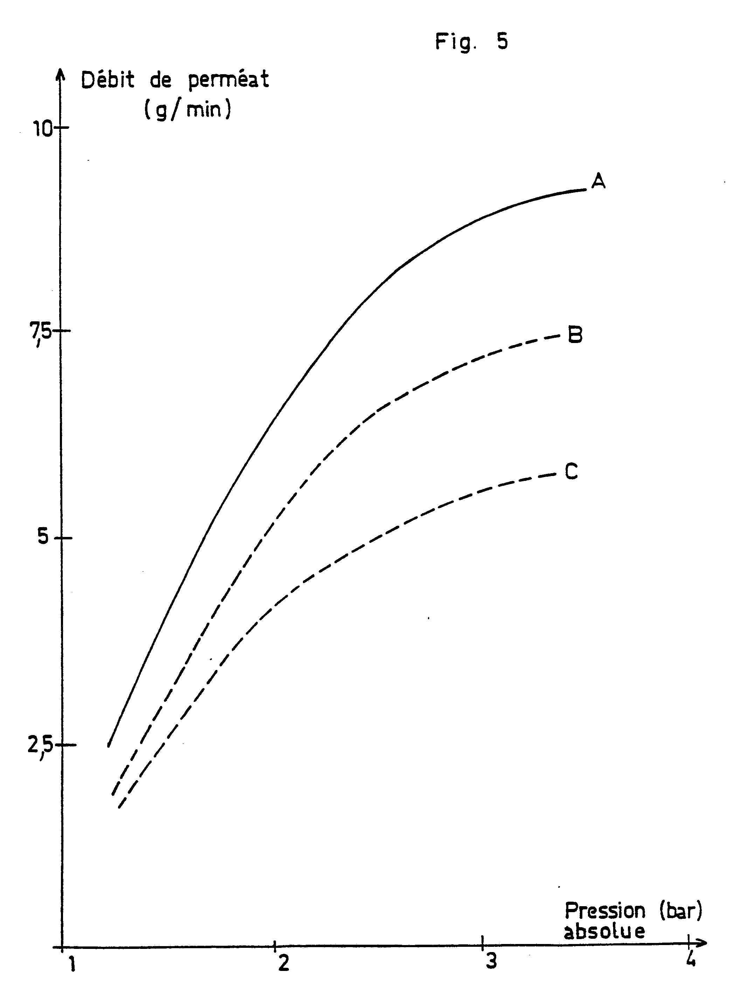

A la figure 5, la courbe A fournit les résultats obtenus dans les conditions suivantes:
- inversion de polarité toutes les 15 minutes,
- densité de courant dans les compartiments, égale à 18,2 mA/cm$^2$.

Les expérimentations ont été effectuées, à titre comparatif:
- d'une part, sans inversion de courant (courbe B),
- d'autre part, en l'absence de courant (courbe C)

On constate qu'une amélioration importante est obtenue par mise en oeuvre du procédé de l'invention, et ce, quelque soit la pression.

Il est à noter que l'essai effectué sans inversion de courant donne une courbe B quasi-identique si l'on place trois membranes semi-perméables (schéma de la figure 2) ou si l'on n'en place qu'une centrale, les autres étant de simples membranes pour séparer les compartiments latéraux (à l'instar des dispositifs décrits dans les brevets US n° 3 905 886 et 4 043 896). Ceci démontre que, dans ces dispositifs d'électro-ultrafiltration connus, une membrane semi-perméable qui se trouve voisine d'une membrane semi-perméable active, n'a pratiquement aucune efficacité.

## Exemple 2 - Electro-ultrafiltration d'une solution de lactosérum doux

Cet exemple à été mis en oeuvre dans un dispositif du même type, comprenant quatre membranes semi-perméables spécifiques comme schématisé à la figure 3. Ces membranes délimitent:
- un compartiment intermédiaire haute pression 5b dans lequel est envoyé la solution de lactosérum doux (6 g/l de protéine, pH 6,8, diamètre des protéines compris entre 2 et 10 nm (20 et 100 Angströms) environ),
- deux compartiments intermédiaires basse pression 4b et 4'b, dans lesquels est envoyée la solution électrolytique (6 g/l de chlorure de sodium, pH 6,8),
- deux compartiments latéraux 10b et 10'b, dans lesquels est envoyée une solution identique à la précédente.

La pression opératoire absolue est fixée à 3 bars dans le compartiment haute pression 5b (pression atmosphérique dans les compartiments basse pression 4b, 4'b).

On mesure au cours du temps le débit de perméat et le volume de solvant extrait.

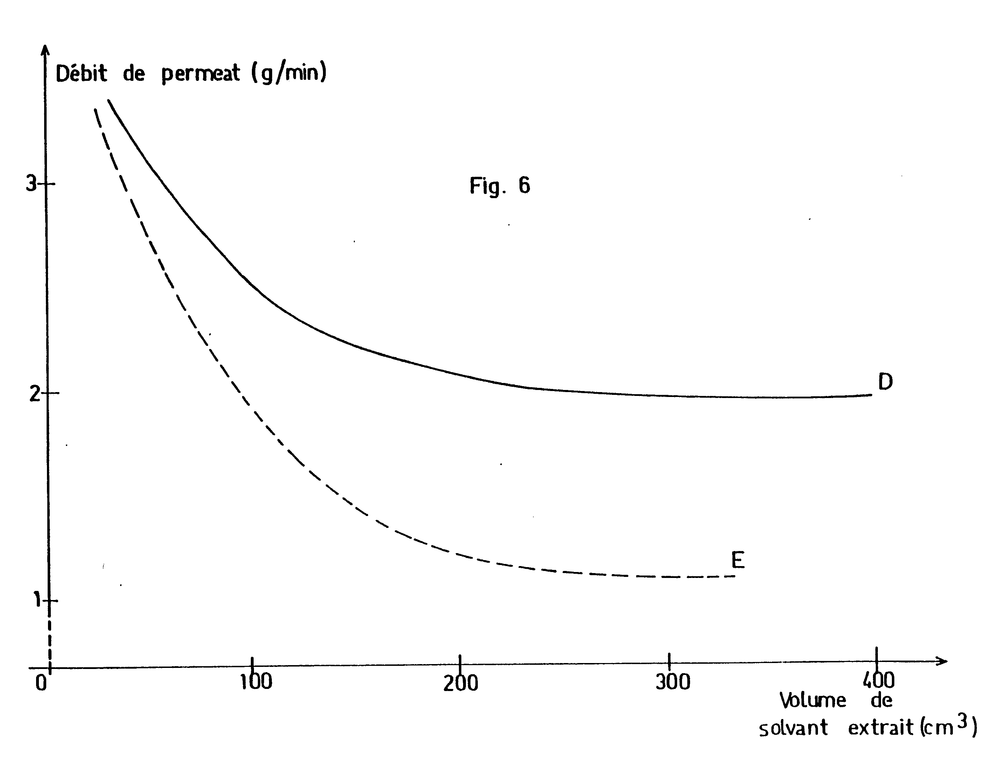

A la figure 6, la courbe D donne les résultats obtenus dans les conditions suivantes:
- inversion de polarité toutes les 5 minutes,
- densité de courant égale à 27 mA/cm$^2$.

Une expérimentation à été effectuée à titre comparatif en l'absence de courant (ultrafiltration traditionnelle) et a fourni la courbe E. La réduction d'efficacité au cours de l'expérience est considérablement plus faible dans le cas du procédé de l'invention.

(Il est à noter que l'expérimentation n'a pas été effectuée à titre comparatif sans inversion du sens du courant car une seule membrane semi-perméable serait alors active et le montage ne serait pas économiquement rentable).

## Exemple 3 - Variation des paramètres

Cet exemple est mis en oeuvre dans les mêmes conditions expérimentales que l'exemple 2, à l'exception des deux paramètres suivants:
- inversion de polarité toutes les minutes,
- densité de courant égale à 18,2 mA/cm$^2$.

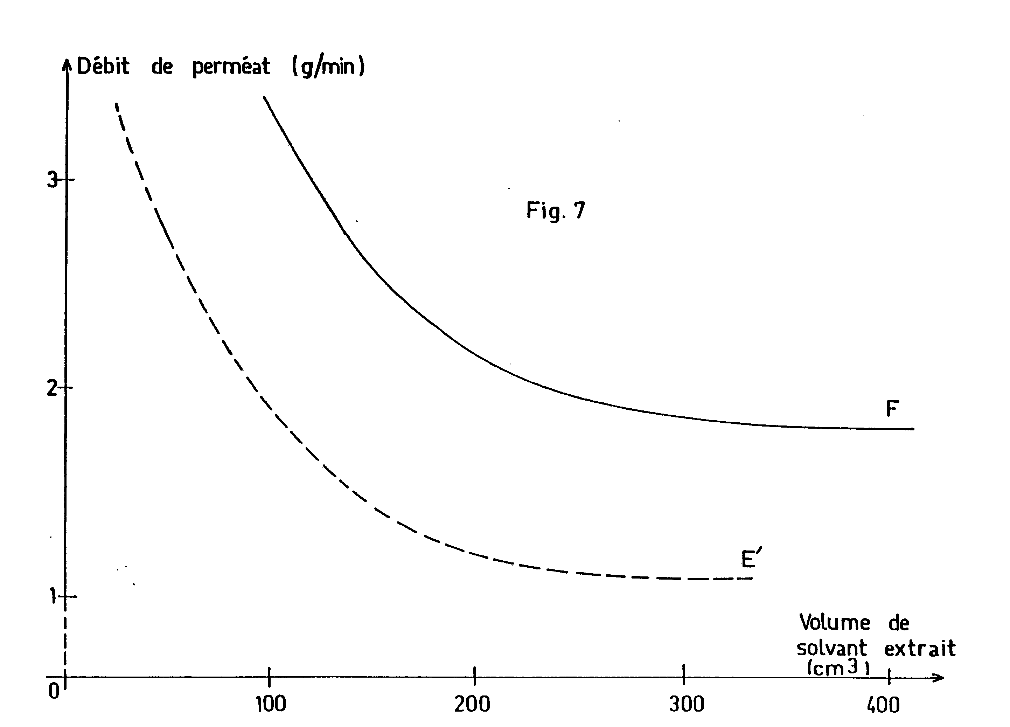

La courbe F donne les résultats obtenus (figure 7 ; à titre comparatif la courbe E' (correspond à E: absence de courant) à été reporté sur ce diagramme.

Les mêmes commentaires que précédemment peuvent être fait pour cet exemple.

**Exemple 4 - Electro-ultrafiltration d'une solution de lactosérum combinée avec une électrodialyse**

Cet exemple est fourni pour montrer que le procédé de séparation conforme à l'invention est compatible avec un traitement simultané d'électrodialyse (déminéralisation).

Cet exemple est mis en oeuvre dans un dispositif analogue à celui des exemples 2 et 3 précédents, mais dans lequel les membranes voisines des électrodes sont remplacées par des membranes d'électrodialyse 14 et 15 imperméables au solvant, mais perméable aux anions pour la membrane 14 et perméable aux cations pour la membrane 15 (figure 4).

La membrane 14 est une membrane échangeuse d'anions, sur laquelle sont greffés des ammoniums quaternaires ("Rhône Poulenc" référence "ARP") ; la membrane 15 est une membrane échangeuse de cations, sur laquelle sont greffés des groupements sulfonés ("Rhône Poulenc" référence "CRP"). Ainsi, en superposition avec les trois compartiments intermédiaires de séparation délimités par les membranes semi-perméables spécifiques (haute pression: 5c et basse-pression 4a et 4'c), ces membranes échangeuses d'ions 14 et 15 délimitent un volume V qui est le siège d'une déminéralisation globale des solutions circulant dans ce volume.

A cet effet, le cycle d'inversion de polarité est rendu dissymétrique, car le phénomène de déminéralisation est totalement réversible:
- courant dirigé de l'électrode 8c vers l'électrode 9c pendant des laps de temps égaux à 10 minutes (sens d'une déminéralisation dans le volume V),
- courant dirigé de l'électrode 9c vers l'électrode 8c pendant des laps de temps égaux à 5 minutes (sens d'une concentration des sels dans le volume V).

On obtient ainsi, à la fois, l'effet désiré d'amélioration de la séparation des macromolécules et une déminéralisation globale des solutions.

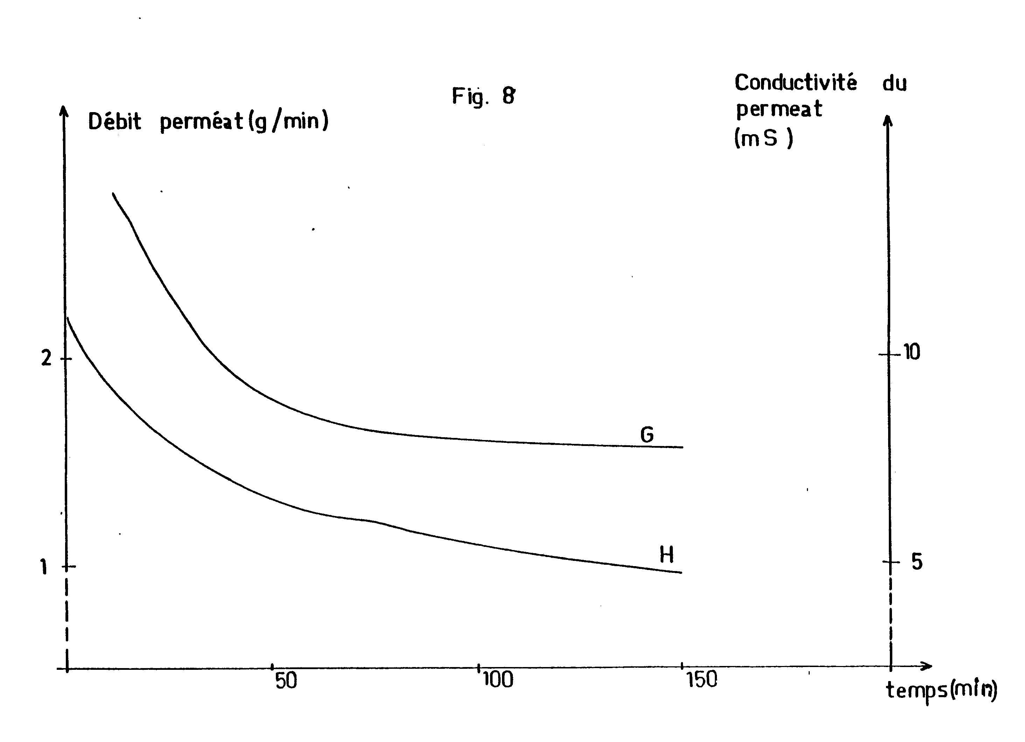

Le diagramme de la figure 8 illustre les résultats obtenus dans le cas d'un lactosérum identique à celui des exemples 2 et 3, et une densité de courant de 18,2 mA/cm$^2$.

La courbe G donne le débit de perméat en fonction du temps et illustre l'efficacité de la séparation des protéines du lactosérum ; la courbe H donne la conductivité du perméat (en millisiemens) en fonction du temps et illustre la réduction de la concentration en sel du perméat.

Sur le plan pratique, on peut ainsi atteindre une concentration en sel désirée, en contrôlant la conductivité du perméat et en rétablissant la symétrie des périodes d'inversion de polarité lorsque la concentration souhaitée est atteinte (ce qui stoppe l'effet global de variation de la concentration en sels).

**Revendications**

1. Procédé de séparation de particules solides ou macromolécules, électriquement chargées, contenues dans une solution, du type dans lequel on filtre la solution sous pression à travers une membrane semi-perméable spécifique de la séparation à effectuer et on applique un champ électrique pour réduire le gradient de concentration au voisinage immédiat de la membrane, ledit procédé étant caractérisé en ce qu'il consiste:
- à agencer en regard les unes des autres n membranes semi-perméables spécifiques (2, 3), en vue de délimiter n-1 compartiments intermédiaires (4, 5) situés entre lesdites membranes, bordés par deux compartiments latéraux (10), n étant supérieur ou égal à 2,
- à disposer une solution électrolytique dans un compartiment sur deux à une pression, dite basse pression, et à disposer la solution à traiter dans les autres compartiments à une pression supérieure, dite haute pression, de sorte que la filtration dans un compartiment intermédiaire (4, 5) s'effectue en sens opposés à travers les deux membranes semi-perméables spécifiques qui le délimitent, soit vers ledit compartiment intermédiaire s'il s'agit d'un compartiment basse pression, soit vers les deux compartiments contigus s'il s'agit d'un compartiment haute pression,
- et à appliquer le champ électrique dans les n+1 compartiments en inversant périodiquement le sens de ce champ à une fréquence inférieure à environ 0,2 hertz.

2. Procédé de séparation selon la revendication 1, caractérisé en ce que l'on agence deux membranes semi-perméables spécifiques en regard l'une de l'autre, l'on dispose la solution électrolytique dans les deux compartiments latéraux situés de part et d'autre de ces membranes semi-perméables spécifiques, l'on dispose la solution à traiter dans le compartiment intermédiaire situé entre lesdites membranes semi-perméables spécifiques de façon à assurer une filtration de sens opposés à travers les deux membranes, filtration dirigée vers les compartiments latéraux, et l'on applique le champ électrique au moyen de deux électrodes situées de part et d'autre des compartiments latéraux et soumises l'une par rapport à l'autre à une différence de potentiel qui est périodiquement inversée.

3. Procédé de séparation selon la revendication 1, caractérisé en ce que l'on agence en regard une succession de membranes semi-perméables spécifiques en nombre au moins égal à 3, l'on dispose la solution électrolytique et la solution à traiter de façon à obtenir une alternance de compartiments basse pression et haute pression séparés les uns des autres par lesdites membranes semi-perméables spécifiques, la filtration à travers une membrane ayant un sens opposé à celle qui s'opère à travers les membranes contiguës, et l'on applique le champ électrique au moyen de deux électrodes (8, 9) situées de part et d'autre des compartiments latéraux et soumises l'une par rapport à l'autre à une différence de potentiel qui est périodiquement inversée.

4. Procédé de séparation selon l'une des revendications 1, 2 ou 3, caractérisé en ce que les inversions du sens du champ électrique sont réalisées aux termes de laps de temps compris entre 0,5 et 5 minutes.

5. Procédé de séparation selon l'une des revendications 1, 2, 3 ou 4, dans lequel le champ électrique périodiquement inversé est ajusté dans une plage de valeurs comprise entre 3 et 20 volts/cm, de sorte que la densité de courant résultante dans les compartiments soit inférieure à 40 milliAmpères/cm$^2$.

6. Procédé de séparation selon l'une des revendications 1, 2, 3, 4 ou 5, dans lequel la pression régnant dans les compartiments basse pression est ajustée à une valeur proche de la pression atmosphérique, cependant que la pression absolue régnant dans les compartiments haute pression est comprise entre 1,5 et 6 bars.

7. Procédé de séparation selon l'une des revendications 1, 2, 3, 4, 5 ou 6, en vue de réaliser une ultrafiltration de macromolécules chargées, de tailles inférieures à 20 nm (200 Angströms).

8. Procédé de séparation selon l'une des revendications 1, 2, 3, 4, 5 ou 6, en vue de réaliser une microfiltration tangentielle de particules solides chargées, de tailles inférieures à 10 µm.

9. Procédé sèlon l'une des revendications précédentes pour séparer des macromolécules ou particules chargées contenues dans une solution, tout en modifiant la teneur en ions de petite taille de ladite solution, caractérisé en ce que:
- l'on dispose au moins deux membranes échangeuses d'ions (14, 15) en vue de délimiter un volume (V) de déminéralisation ou concentration en ions,
- l'on applique le champ électrique inversé périodiquement dans un sens puis dans l'autre pendant des périodes de durées différentes.

10. Dispositif de séparation pour la mise en oeuvre du procédé conforme à l'une des revendications précédentes, du type comprenant au moins un compartiment haute pression contenant une solution à traiter, au moins un compartiment basse pression contenant une solutionne électrolytique, au moins une membrane semi-perméable de filtration spécifique de la séparation à effectuer, disposée entre lesdits compartiments, et des électrodes aptes à appliquer un champ électrique dans lesdits compartiments, ledit dispositif étant caractérisé en ce qu'il comprend n membranes semi-perméables de filtration spécifique (2, 3) disposées directement en regard les unes des autres pour délimiter une alternance de compartiments (4, 5) haute pression et basse pression (n ⩾ 2), les électrodes (8, 9) situées de part et d'autre des deux compartiments latéraux (10) étant reliées à des moyens électriques (12, 13) adaptés pour les soumettre à une différence de potentiel périodiquement inversée à une fréquence inférieure à environ 0,2 hertz.

11. Dispositif de séparation selon la revendication 10, caractérisé en ce que les moyens électriques comprennent un générateur électrique à courant continu (12) associé à un inverseur de polarité (13) programmable selon une fréquence d'inversion comprise entre $5.10^{-4}$ et $1,5.10^{-2}$ hz.

12. Dispositif de séparation selon l'une des revendications 10 ou 11, permettant de réaliser simultanément une électrodialyse, caractérisé en ce qu'il comprend au moins deux membranes échangeuses d'ions (14, 15) situées entre les membranes semi-perméables ou de part et d'autre de celles-ci, les moyens électriques (12, 13) étant adaptés pour soumettre les électrodes à une différence de potentiel dans un sens puis dans l'autre pendant des périodes de durées différentes.

**Patentansprüche**

1. Verfahren zur Trennung von in einer Lösung enthaltenen elektrisch geladenen festen Teilchen oder Makromolekülen, von der Art, bei der man die Lösung unter Druck durch eine für die durchzuführende Trennung spezifische halbdurchlässige Membran filtriert und ein elektrisches Feld anlegt, um den Konzentrationsgradienten in der unmittelbaren Nähe der Membran einzuschränken, wobei das besagte Verfahren dadurch gekennzeichnet ist, daß es die folgenden Stufen umfaßt:
- Anordnung gegenüber einander von n spezifischen halbpermeablen Membranen (2, 3), um n-1 zwischen den besagten Membranen gelegene Zwischenkammern (4, 5), die durch zwei seitliche Kammern (10) begrenzt sind, abzugrenzen, wobei n mehr als 2 beträgt oder gleich 2 ist,
- Einführung einer elektrolytischen Lösung in jede zweite Kammer unter einem Druck, dem sogenannten niederen Druck und Einführung der zu behandelnden Lösung in die anderen Kammern unter einem höheren Druck, dem sogenannten hohen Druck, so daß die Filtration in einer Zwischenkammer (4, 5) in entgegengesetzten Richtungen durch die beiden sie abgrenzenden spezifischen halbdurchlässigen Membranen hindurch stattfindet, und zwar auf die besagte Zwischenkammer zu, wenn es sich um eine Niederdruckkammer handelt, bzw. auf die beiden anschließenden Kammern zu, wenn es sich um eine Hochdruckkammer handelt,
- Anlegung des elektrischen Feldes in den n+1 Kammern unter periodischer Umkehrung der Richtung dieses Feldes bei einer Frequenz, die geringer ist als ungefähr 0,2 Hertz.

2. Trennungsverfahren im Einklang mit Anspruch 1, dadurch gekennzeichnet, daß man zwei spezifische halbdurchlässige Membranen einander gegenüber anordnet, die elektrolytische Lösung in die beiden seitlichen Kammern zu beiden Seiten dieser spezifischen halbdurchlässigen Membranen einführt, die zu behandelnde Lösung in die zwischen den besagten spezifischen halbdurchlässigen Membranen gelegene Zwischenkammer einführt, um Filtration in entgegengesetzten Richtungen durch die beiden Membranen hindurch zu bewirken, wobei die Filtration in Richtung der seitlichen Kammern stattfindet, und das elektrische Feld mit Hilfe von zwei zu beiden Seiten der seitlichen Kammern befindlichen Elektroden anlegt, die im Verhältnis zueinander einer periodisch umgekehrten Spannungsdifferenz ausgesetzt sind.

3. Trennungsverfahren im Einklang mit Anspruch 1, dadurch gekennzeichnet, daß man eine Reihe von gegenüberliegenden spezifischen halbdurchlässigen Membranen anordnet, deren Anzahl mindestens gleich 3 ist, daß man die elektrolytische Lösung und die zu behandelnde Lösung so einführt, daß wechselweise Anordnung von Niederdruck- und Hochdruckkammern erzielt wird, die voneinander durch die besagten spezifischen halbdurchlässigen Membranen getrennt sind, daß die Filtration durch eine Membran hindurch in einer Richtung stattfindet, die zu der durch die benachbarten Membranen hindurch entgegengesetzt ist, und daß man das elektrische Feld mit Hilfe von zwei Elektroden (8, 9) zu beiden Seiten der seitlichen Kammern anlegt, wobei die besagten Elektroden im Verhältnis zueinander einer periodisch umgekehrten Spannungsdifferenz ausgesetzt sind.

4. Trennungsverfahren im Einklang mit einem der Ansprüche 1, 2 oder 3, dadurch gekennzeichnet, daß die Umkehrungen der Richtung des elektrischen Feldes nach Zeitabständen zwischen 0,5 und 5 Minuten bewirkt werden.

5. Trennungsverfahren im Einklang mit einem der Ansprüche 1, 2, 3 oder 4, bei dem das periodisch umgekehrte elektrische Feld innerhalb eines Bereiches von Werten zwischen 3 und 20 Volt/cm geregelt wird, so daß die in den Kammern bewirkte Stromdichte geringer ist als 40 Milliampere/cm$^2$.

6. Trennungsverfahren im Einklang mit einem der Ansprüche 1, 2, 3, 4 oder 5, bei dem der in den Niederdruckkammern vorherrschende Druck auf einen dem atmosphärischen Druck nahen Wert eingestellt wird, während der in den Hochdruckkammern vorherrschende absolute Druck zwischen 1,5 und 6 bar beträgt.

7. Trennungsverfahren im Einklang mit einem der Ansprüche 1, 2, 3, 4, 5 oder 6, dessen Ziel in Ultrafiltration von geladenen Makromolekülen in Größen von weniger als 20 nm (200 Ångström) besteht.

8. Trennungsverfahren im Einklang mit einem der Ansprüche 1, 2, 3, 4, 5 oder 6, dessen Ziel in tangentialer Mikrofiltration fester geladener Teilchen mit Größen von weniger als 10 μm

besteht.

9. Verfahren im Einklang mit einem der vorhergehenden Ansprüche zwecks Trennung der in einer Lösung enthaltenen geladenen Makromolekülen oder Teilchen, indem der Gehalt der besagten Lösung an Ionen kleiner Größe modifiziert wird, indem
- man mindestens zwei Ionenaustauschmembranen (14, 15) anordnet, um ein Volumen (V) der Demineralisation oder Konzentration von Ionen abzugrenzen,
- man das periodisch umgekehrte elektrische Feld während Zeitspannen unterschiedlicher Dauer in der einen Richtung und dann in der anderen Richtung anlegt.

10. Trennvorrichtung für die Durchführung des Verfahrens im Einklang mit einem der vorstehenden Ansprüche, die so beschaffen ist, daß sie mindestens eine eine zu behandelnde Lösung enthaltende Hochdruckkammer, mindestens eine eine elektrolytische Lösung enthaltende Niederdruckkammer, und mindestens eine halbdurchlässige Membran zu für die durchzuführende Trennung spezifischer Filtration zwischen den besagten Kammern und Elektroden umfaßt, die so beschaffen sind, daß sie in den besagten Kammern ein elektrisches Feld anlegen, wobei die besagte Vorrichtung dadurch gekennzeichnet ist, daß sie n halbdurchlässige Membranen für spezifische Filtration (2, 3), die einander unmittelbar gegenüber angeordnet sind, umfaßt, um wechselweise Anordnung von Hochdruck- und Niederdruckkammern (4, 5) (n ⩾ 2) abzugrenzen, wobei die Elektroden (8, 9) zu beiden Seiten der beiden seitlichen Kammern (10) an elektrische Mittel (12, 13) angeschlossen sind, die in der Lage sind, sie bei einer Frequenz von weniger als ungefähr 0,2 Hertz einer periodisch umgekehrten Spannungsdifferenz auszusetzen.

11. Trennungsvorrichtung im Einklang mit Anspruch 10, dadurch gekennzeichnet, daß die elektrischen Mittel einen elektrischen Dauerstromgenerator (12) umfassen, der mit einem mit einer Umkehrfrequenz zwischen 5.10$^{-4}$ und 1,5. 10$^{-2}$ Hz programmierbaren Polaritätswandler in Verbindung steht.

12. Trennvorrichtung im Einklang mit einem der Ansprüche 10 oder 11, die es ermöglicht, gleichzeitig eine Elektrodialyse zu bewirken, dadurch gekennzeichnet, daß sie mindestens zwei Ionenaustauschmembranen (14, 15) zwischen den halbdurchlässigen Membranen oder zu beiden Seiten von diesen umfaßt, wobei die elektrischen Mittel (12, 13) so beschaffen sind, daß die Elektroden während Zeitspannen unterschiedlicher Dauer in einer Richtung und dann in der anderen einer Spannungsdifferenz unterzogen werden.

## Claims

1. Process for the separation of electrically charged solid particles or macromolecules contained in a solution, of the type in which one filters the solution under pressure through a semi-permeable membrane specific to the separation to be carried out and in which one applies an electric field in order to reduce the gradient of concentration in the immediate vicinity of the membrane, said process being characterised in that it consists:

- in arranging opposite one another n specific semi-permeable membranes (2, 3), with a view to delimiting n-1 intermediate compartments (4, 5) situated between said membranes, bounded by two lateral compartments (10), n being higher than or equal to 2,

- in providing an electrolytic solution within every other compartment at a pressure, so-called low pressure, and to provide the solution to be treated in the other compartments at a higher pressure, so-called high pressure, in such a way that the filtration in an intermediate compartment (4, 5) takes place in opposite directions through the two specific semi-permeable membranes delimiting it, either towards said intermediate compartment if it is a low-pressure compartment or towards the two adjacent compartments if it is a high-pressure compartment,

- and in applying the electric field in the n + 1 compartments by periodically inverting the direction of said field at a frequency lower than about 0.2 Hertz.

2. Process of separation according to claim 1, characterised in that one arranges two specific semi-permeable membranes opposite one another, provides the electrolytic solution in the two lateral compartments situated at either side of these specific semi-permeable membranes, provides the solution to be treated within the intermediate compartment situated between said specific semi-permeable membranes in such a way as to ensure filtration in opposite directions through the two membranes, said filtration being directed towards the lateral compartments, and applies the electric field by means of two electrodes situated at either side of the lateral compartments and subject one in relation to the other to a potential difference which is periodically inverted.

3. Process of separation according to claim 1, characterised in that one arranges opposite one another a succession of specific semi-permeable membranes numbering at least 3, that one provides the electrolytic solution and the solution to be treated in such a way as to achieve alternation of low-pressure and high-pressure compartments separated from one another by said specific semi-permeable membranes, the filtration through one membrane taking place in the direction opposite to that in which it takes place through the adjacent membranes and in that one applies the electric field by means of two electrodes (8, 9) situated at either side of the lateral compartments and subject one in relation to the other to a potential difference which is periodically inverted.

4. Process of separation according to one of claims 1, 2 or 3, characterised in that the directional inversions of the electric field are brought about after intervals of time amounting to between 0.5 and 5 minutes.

5. Process of separation according to one of claims 1, 2, 3 or 4, whereby the periodically inverted electric field is adjusted within a range of values amounting to between 3 and 20 volts/cm, in such a way that the current density brought about in the compartments is lower than 40 milliamperes/cm$^2$.

6. Process of separation according to one of claims 1, 2, 3, 4 or 5, in which the pressure obtaining within the low-pressure compartments is adjusted to a value close to atmospheric pressure, whereas the absolute pressure obtaining in the high-pressure compartments amounts to between 1.5 and 6 bars.

7. Process of separation according to one of claims 1, 2, 3, 4, 5 or 6, with a view to bringing about ultrafiltration of charged macromolecules of sizes lower than 20 nm (200 Ångström).

8. Process of separation according to one of claims 1, 2, 3, 4, 5 or 6, with a view to bringing about tangential microfiltration of charged solid particles of sizes lower than 10 μm.

9. Process according to one of the preceding claims for separating the charged macromolecules of particles contained in a solution while modifying the content of ions of small size of the said solution, characterised in that:

- one arranges at least two ion exchange membranes (14, 15) with a view to delimiting a volume (V) of demineralisation or ion concentration,

- one applies the inverted electric field periodically in one direction and then in another direction during periods of different duration.

10. Separation device for putting into effect the process according to one of the preceding claims, of the type comprising at least one high-pressure compartment containing a solution to be treated, at least one low-pressure compartment containing an electrolytic solution, at least one semi-permeable filtration membrane specific to the separation to be carried out and situated between said compartments, and electrodes capable of applying an electric field in said compartments, said device being characterised in that it comprises n semi-permeable membranes for specific filtration (2, 3) arranged directly opposite one another so as to delimit an alternation of high- and low-pressure compartments (4, 5) (n ⩾ 2), the electrodes (8, 9) situated at either side of the two lateral compartments (10) being connected to electric means (12, 13) capable of subjecting them to a periodically inverted potential difference at a frequency lower than about 0.2 Hertz.

11. Separation device according to claim 10, characterised in that the electric means comprise an electric permanent current generator (12) associated with a polarity inverter (13) programmable at an inversion frequency amounting to between $5.10^{-4}$ and $1.5.10^{-2}$ Hz.

12. Separation device according to one of claims 10 or 11, making it possible to bring about simultaneously an electrodialysis, characterised in that it comprises at least two ion exchange membranes (14, 15) situated between the semi-permeable membranes or at either side of the latter, the electric means (12, 13) being capable of subjecting the electrodes to a potential difference in one direction and then in the other during periods of different duration.

Fig. 1

0 224 539

Fig. 2

-10a - | -4a - | -5a- | -10'a-

B.P.     H.P.

Fig. 3

-10b - | -4b- | -5b - | -4'b - | ~10'b-

B.P.    H.P.    B.P.

Fig. 4

V

14         15

8c    -4c - | -5c ~ | -4'c -    9c

Fig. 5

0 224 539

5

Fig. 6

Débit de permeat (g/min)

Volume de solvant extrait (cm$^3$)

D

E

0 224 539

Fig. 7

Fig. 8